# EUROPÄISCHE PATENTANMELDUNG

(11) **EP 3 355 186 A1**
(43) Veröffentlichungstag der Anmeldung: **01.08.2018**
(21) Anmeldenummer: 18153313.4
(22) Anmeldetag: 24.01.2018
(51) Int. Cl.: G06F 9/445, G06F 8/34, G06F 8/36

(54) **ERZEUGUNG UND AUSFÜHRUNG VON SOFTWARE-MODULEN**

(30) Priorität: 25.01.2017 DE 102017201156
(71) Anmelder: Brixxbox GmbH, 52428 Julich (DE)
(72) Erfinder: Krage, Stephan Bruno, 52428 Jülich (DE)
(74) Vertreter: Jostarndt Patentanwalts-AG

(57) **Zusammenfassung**

Die Erfindung betrifft ein Computersystem (1) zur Erzeugung und Ausführung eines anwendungsspezifisch konfigurierten Software-Moduls (3) sowie auf ein Verfahren (100) zur Erzeugung und Ausführung Software-Moduls (3) auf dem Computersystem (1). Mit dem erfindungsgemäßen Computersystem (1) wird es ermöglicht, die erzeugten und ausgeführten Software-Module (3) vor Ort und ohne Programmierkenntnisse individuell und mit geringem Aufwand auf den jeweiligen Bedarf und die vorhandene technische Infrastruktur skalierbar wunschgemäß anzupassen oder zu erstellen.

## Beschreibung

### Gebiet der Erfindung

Die Erfindung bezieht sich auf ein Computersystem zur Erzeugung und Ausführung anwendungsspezifisch konfigurierter Software-Module sowie auf ein Verfahren zur Erzeugung und Ausführung von Software-Modulen auf dem Computersystem.

### Hintergrund der Erfindung

Ein Enterprise-Resource-Planning (ERP) System ist eine komplexe oder eine Vielzahl miteinander kommunizierender Anwendungssoftware beziehungsweise IT-Systeme, die zur Unterstützung von Unternehmensprozessen eingesetzt werden. Komplexe ERP-Systeme werden häufig in Teil-Systemen, sogenannten Anwendungs-Modulen (ERP-Module) aufgeteilt, die je nach Unternehmensbedarf miteinander kombiniert werden können. Module herkömmlicher Datenverarbeitungssysteme können meistens durch zusätzlich vorhandene Konfigurationsparameter oder gegebenenfalls eingebundenen Script-Programmiersprachen in Ihrer Funktionsweise beeinflusst werden, um einzelnen betriebswirtschaftlichen Kundenanforderungen gerecht zu werden. Die Funktionsweise des Moduls wird durch solch eine Parametrisierung eingeschränkt bzw. erweitert. Module sind in sich als Programmquellcode jedoch geschlossen und bilden feste Einheiten (z. B. Kunden- oder Artikelstamm), die nach der Übersetzung in Maschinensprache (Kompilieren) entstehen und erst somit Ihre Lauffähigkeit erhalten. ERP-Systeme sollten weitgehend alle Geschäftsprozesse abbilden. Eine durchgehende Integration und eine Abkehr von Insellösungen führen zu einem ganzheitlichen ERP-System, in dem Ressourcen unternehmensweit verwaltet werden können. ERP-Systeme verbessern den Kommunikationsfluss im Unternehmen und können die elektronische Zusammenarbeit im Unternehmen effizienter gestalten. Durch den ganzheitlichen Ansatz für eine unternehmensweite Nutzung müssen die verwendeten Teil-Systeme alle Prozesse des Unternehmens abbilden, auch wenn lokale von den dortigen Nutzern nur ein kleiner Bruchteil der Funktionalität des Teil-Systems tatsächlich benötigt wird. Durch die entsprechende Größe des ERP-Systems stellt das System zwar eine Fülle an Funktionen zur Verfügung, ist damit aber auch sehr komplex und somit auch kompliziert zu bedienen. Hierbei wachsen die Anzahl der Teil-Systeme (ERP-Module) im ERP-System und die verfügbaren Datenfelder stetig an. Die wachsende Komplexität innerhalb der einzelnen ERP-Module sowie des Gesamt-ERP-Systems führen zu einem erhöhten Beratungsbedarf bei der Einführung, zu einem erhöhtem Schulungsbedarf der Nutzer des ERP-Systems, erfordern leistungsfähige und damit kostspielige Hardwarekomponenten und einen hohen technischen Wartungsaufwand des vernetzten ERP-Systems. Gerade kleine Unternehmen nutzen oftmals nicht die angebotene Funktionalität im vollen Umfang, sodass für kleine Unternehmen das Betreiben solcher ERP-System aufwendig ist und maßgeschneiderte oder gar auf den Bedarf anpassbare ERP-Systeme nicht angeboten werden und dies Unternehmen nicht die technischen Ressourcen besitzen, solche System selber zu erstellen.

Es wäre daher wünschenswert, die Möglichkeit zur Verfügung zu haben, mit der ERP-Module vor Ort und ohne Programmierkenntnisse individuell auf den jeweiligen Bedarf und die vorhandene technische Infrastruktur skalierbar angepasst oder erstellen zu können.

### Zusammenfassung der Erfindung

Es ist daher eine Aufgabe der vorliegenden Erfindung zu ermöglichen, dass ERP-Module vor Ort und ohne Programmierkenntnisse individuell und mit geringem Aufwand auf den jeweiligen Bedarf und die vorhandene technische Infrastruktur skalierbar angepasst oder erstellt werden können.

Diese Aufgabe wird gelöst durch ein Computersystem mit mehreren miteinander zum Datenaustausch verbundenen Komponenten umfassend mindestens eine Recheneinheit, mindestens eine Speichereinheit und mindestens eine Ein- und Ausgabeeinheit und eine zumindest auf einer der Komponenten installierten Software mit einer geeigneten Laufzeitumgebung, die eine Vielzahl an unterschiedlichen Funktionsbausteinen zur Erzeugung mindestens eines anwendungsspezifisch konfigurierten Software-Moduls umfasst, wobei das durch die Software ausgeführte Software-Modul eine Untermenge der verfügbaren Funktionsbausteine umfasst, wobei eine Lauffähigkeit der Software und des mindestens einen Software-Moduls auf Basis von abgespeicherten Konfigurationsdaten hergestellt wird, die durch die Speichereinheit bereitgestellt werden, und auf die die Software nach deren Aufruf in der Laufzeitumgebung zugreift, zumindest einen Teil der Konfigurationsdaten einliest und eine Verknüpfung der Funktionsbausteine gemäß der eingelesenen Konfigurationsdaten zu Ausführung des so erzeugten Software-Moduls durchführt.

Der Begriff "Modul" bezeichnet hierbei eine abgeschlossene funktionale Einheit einer Software, bestehend aus einer Folge von Verarbeitungsschritten und Datenstrukturen. Inhalt eines Moduls ist häufig eine wiederkehrende Berechnung oder Bearbeitung von Daten, die mehrfach durchgeführt werden muss.

Der Begriff "Funktionsbaustein" bezeichnet in sich geschlossene funktionale Software-Einheiten, die jedoch in ihrer Funktionsweise sehr limitiert sind. So kann ein einzelner Funktionsbaustein keinen Ablauf wie in einem Modul abbilden. Jeder Funktionsbaustein an sich bietet nur eine bestimmte Funktionsweise, die sich oft mittels zusätzlichen Parametern definieren lässt. Erste das Zusammenspiel verschiedener Funktionsbausteine unterschiedlicher Bausteintypen bildet ein Modul bzw. einen funktionellen Ablauf ab. Innerhalb der erfindungsgemäßen Software sind keinerlei prozessorientierte Abläufe definiert. Ohne entsprechende Konfiguration kann die erfindungsgemäße Software nichts. Mit entsprechender Konfiguration anhand der Konfigurationsdaten sind jedoch gemäß der vorliegenden Erfindung unendlich viele in ihrer Funktionsweise unterschiedliche Software-Module erstellbar.

Der Begriff "Recheneinheit" bezeichnet die Hardware-Komponente im Computersystem, mit der zumindest Software ausgeführt und Datenmanipulationen gemäß der ausgeführten Software durchgeführt werden können. Die Recheneinheit kann dabei beispielsweise ein Computerchip, ein Prozessor oder ein Server sein. Der Begriff "Speichereinheit" bezeichnet alle Komponenten, auf oder mit denen digitale Daten gespeichert werden können, wie beispielsweise ein fest installierter oder mobiler Datenspeicher, eine Festplatte, eine Datenbank oder ein Cloud-Speicher. Der Begriff "Ein- und Ausgabeeinheit" bezeichnet alle Komponenten, mit denen digitale Daten für den Nutzer dargestellt oder vom Nutzer oder einer anderen Hardwarekomponente in das Computersystem eingegeben werden können, wie beispielsweise Tastaturen, Datenträgerlaufwerke, Spracheingabe- und Ausgabemodule, Bildschirme etc. Der Begriff Komponente bezeichnet dabei jeden zum Datenaustausch mit anderer Komponenten verbindbaren Bestandteil eines Computersystems inklusive der Hardware zur Datenübertragung.

Während bei herkömmlichen Datenverarbeitungssystemen (beispielsweise ERP-Systeme) ihre Funktionen inklusive der zugehörigen Datenstruktur bei der Kompilation (Übersetzung in Maschinensprache) erstellt werden, entstehen in der vorliegenden Erfindung die Software-Module erst mit den Konfigurationsdaten dynamisch zur Laufzeit. Die Programmstruktur der erfindungsgemäßen Software ist so ausgelegt, den Nachteil der traditionell überladenen ERP-Systeme von vornerein zu unterbinden. Wachsende Funktionalität wirken sich beim erfindungsgemäßen Computersystem beim Nutzer nicht negativ aus, da alleine die Konfiguration über Anzahl und Komplexität einzelner Software-Module entscheidet. Die Anzahl der Module sowie die Anzahl der abgesetzten Felder bleiben bei bestehenden Computersystemen stets konstant, auch nachdem die neueste Version der Software installiert wurde. Ebenso ist es auch nicht notwendig, die Software auf eine bestimmte Anwendung auszurichten. Als wesentlich ist dabei die Entstehungszeit der einzelnen lauffähigen Software-Module im Zusammenspiel der einzelnen Funktionsbausteine zu betrachten. Vorteilhaft ist auch die losgelöste Datenstruktur. Die erfindungsgemäße Software ist nur mit der Konfiguration, die als das abgespeicherte anwendungsspezifische Konfigurationsmodul vorliegt, einsetzbar. Ohne eine gültige Konfiguration erscheint lediglich eine Hauptmaske, die sogenannte Laufzeitumgebung, ohne weitere nennenswerte Funktionen. Aufrufe eines Software-Moduls sind hier ohne entsprechende Konfigurationsdaten nicht möglich, da sie im Programmcode der Software als solche nicht definiert sind. Mit entsprechender Konfiguration sind jedoch prinzipiell unendlich viele in ihrer Funktionsweise unterschiedliche Software-Module erstellbar. Die Konfigurationsdaten für die Konfigurations-(Start-) und System-Module sind dabei Teil der Startkonfiguration, sodass bei Ausführung der Software die Software dann auf diese Konfigurationsmodule zugreifen kann. Die Software ohne jegliche Konfiguration ist dagegen vollkommen nutzlos. Die Funktionsbausteine lassen sich mit Funktionen und Parametern innerhalb der Konfigurationsmodule in ihrem Verhalten beeinflussen bzw. abändern. Erfindungsgemäß eingesetzte Software-Module verändern sich mit fortschreitendem Lebenszyklus der Software somit nicht, solange die Konfiguration an sich nicht abgeändert wird. Vielmehr erweitern sich nur die Konfigurationsmöglichkeiten bei Installation neuer Software-Versionen.

Der Begriff "Konfiguration" bezeichnet hierbei die Anwendung der Konfigurationsdaten zur Erstellung eines darauf basierend definierten speziellen Software-Moduls.

Mit dem erfindungsgemäßen Computersystem wird es somit ermöglicht, dass die erzeugten und ausgeführten Software-Module vor Ort und ohne Programmierkenntnisse individuell und mit geringem Aufwand auf den jeweiligen Bedarf und die vorhandene technische Infrastruktur skalierbar wunschgemäß angepasst oder erstellt werden können.

In einer Ausführungsform umfasst das Computersystem des Weiteren zumindest ein selbständig ausführbares Konfigurationsmodul, mit dem die Konfigurationsdaten erfasst und in der Speichereinheit abgespeichert werden können. Das Konfigurationsmodul stellt eine auf dem Computersystem installierte und ausgeführte Konfigurations-Software dar und kann beispielsweise unabhängig von der Software zur Erzeugung eines Software-Moduls auf dem Computersystem ausgeführt werden. Hiermit wird die Software-Modulerstellung aus der Hintergrundprogrammierung heraus auf die flexible Konfiguration vor Ort verlagert. Die notwendigen Konfigurationsdaten für die Erstellung des gewünschten Software-Moduls können dabei durch den Nutzer des Computersystems vor Ort eingegeben werden, der die gewünschten individuellen Prozessabläufe kennt. Somit kann gewünschte Software-Konfiguration flexibel vor Ort und auf die gewünschten Funktionen und abzubildenden Prozessabläuft angepasst und jederzeit wieder geändert werden. Die so definierten Konfigurationsdaten machen ein individuelles Software-Modul vor Ort lauffähig. Auf die Aufgabe der Programmierung entfällt somit nur noch die Erstellung allgemeiner Funktionsbausteine, die innerhalb der Software-Modulkonfiguration einsetzbar sein müssen. Da diese Funktionsbausteine modulunabhängig programmiert werden können, sind sie anschließend unendlich skalierbar. Die Programmierung muss sich somit nicht mehr mit den einzelnen individuellen Prozessanforderungen auseinander setzen und kann dies den Nutzern vor Ort überlassen. Die Arbeitsteilung kann hierdurch wesentlich effizienter und somit produktiver gestaltet werden.

In einer weiteren Ausführungsform ist das Konfigurationsmodul dazu ausgestaltet, die erfassten Konfigurationsdaten in mindestens einer Konfigurationstabelle in der Speichereinheit zu deren Einlesung abzuspeichern. Damit wird es ermöglicht, die für ein gewünschtes Software-Modul zugehörigen Konfigurationsdaten separat von anderen Daten in einer klaren Struktur abzuspeichern.

In einer bevorzugten Ausführungsform ist das Konfigurationsmodul dabei dazu ausgestaltet, die Konfigurationsdaten gemäß Nutzervorgaben in unterschiedlichen Kombinationen in unterschiedlichen Konfigurationstabellen zur Einlesung der Konfigurationsdaten zumindest einer der Konfigurationstabellen abzuspeichern. Damit können mit der Software unterschiedlich gewünschte Software-Module mittels separater unterschiedlicher Konfigurationstabellen definiert und bei Bedarf gemäß diesen Tabellen durch die Software erstellt werden. Hierbei liest die Software lediglich die gewünschten Konfigurationsdaten aus mindestens einer Konfigurationstabelle zur Erstellung eines Software-Moduls ein. Soll zu einem anderen Zeitpunkt ein anderes Software-Modul ausgeführt werden, so liest zu diesem Zeitpunkt die Software die Konfigurationsdaten wieder aus mindesten einer Konfigurationstabelle ein.

In einer weiteren Ausführungsform sind alle benötigten Datenzugriffe, die nicht durch die Software zur Laufzeit automatisch erstellt werden, sowie Schlüsselangaben der Datenhaltung zur Ausführung eines der gemäß der jeweiligen Konfigurationsdaten zu erstellenden und auszuführenden Software-Module abgespeichert, beispielsweise in der Speichereinheit. Damit kann auf die Besonderheiten eines spezifischen einzelnen Moduls genauer eingegangen werden.

In einer weiteren Ausführungsform erzeugt die Software neben physikalischen Datentabellen zusätzlich auch logische oder virtuelle Tabellen zur Abspeicherung der Kundendaten, um eine Standardisierung der benötigten Datenzugriffe zu ermöglichen. Dies erlaubt eine sehr einfache physikalische Datenstruktur. Alle benötigten SQL-Datenzugriffe (SQL-Statements) sind innerhalb der Konfigurationsdaten gespeichert und können angepasst bzw. abgeändert werden. Die Zugriffsmöglichkeiten sind damit innerhalb der Konfiguration des Software-Moduls offen.

In einer Ausführungsform liest die Software nach Aufruf aus den Konfigurationsdaten zumindest Systemkonfigurationsdaten zur Erstellung und Ausführung eines System-Moduls als das Software-Modul ein. Damit wird sichergestellt, dass der Nutzer zumindest eine Hauptmaske für weitere Eingaben dargestellt bekommt, die über die Systemkonfigurationsdaten definiert ist. Das System-Modul kann dabei als Eingangsportal für nachfolgende Software-Modul-Erzeugungen dienen.

In einer bevorzugten Ausführungsform werden durch das System-Modul unterschiedliche Gruppen an Konfigurationsdaten zur Auswahl des von der Software nachfolgend zu erstellenden Anwender-Moduls als weiteres Software-Modul angeboten, vorzugsweise wird die auszuwählende Gruppe an Konfigurationsdaten als Menübaum angeboten. Das System-Modul stellt hier das Startmodul zur Auswahl der eigentlich gewünschten auszuführenden Anwender-Module dar. Diese sind dabei durch die jeweiligen Konfigurationsdaten in den Konfigurationstabellen definiert, die ihrerseits nach Belieben auf Wunsch mittels des Konfigurationsmoduls geändert werden können.

In einer weiteren Ausführungsform sind die Funktionsbausteine Quellcodebestandteile der Software. Damit sind alle verfügbaren Funktionsbausteine zusammen mit der Software zu deren Verknüpfung verfügbar, was ein fehlerloses Interagieren der Funktionsbausteine gemäß der Konfigurationsdaten sicherstellt. Hierbei lassen sich diese mit Funktionen und Parametern innerhalb der Konfiguration in ihrem Verhalten beeinflussen beziehungsweise abändern.

In einer weiteren Ausführungsform stellt die Software hierbei Funktionen zur Gewährleistung der konkreten Verbindungsmöglichkeiten der Funktionsbausteine untereinander bereit. Solche Funktionen umfassen beispielsweise sogenannte Controls beziehungsweise Steuerelemente (wie Masken, Seiten, Eingabefelder) sowie deren Eigenschaften (wie Höhe, Breite, Feld, Typ, Datenfeld, Funktion etc.), Funktionen für Controls bzw. Steuerelemente, Events bzw. Ereignisse für Controls bzw. Steuerelemente, Funktionen für Events bzw. Ereignisse (wie beispielsweise eine Ereignisfunktion und/oder Datenzugriffe beziehungsweise sogenannte SQL-Statements).

In einer weiteren Ausführungsform erfüllt der Funktionsbaustein erst durch eine Aktivierung einer speziellen Moduleventverknüpfung oder einer integrierten Funktion eine ihm zugeteilte fest definierte Aufgabe auf eine kontextunabhängige Weise. Eine Prüfung auf ablaufabhängige Plausibilität zu anderen vorhandenen Daten kann dieser Baustein beispielsweise dadurch aber nicht durchführen. Die Plausibilität muss sich stattdessen aus der Gesamtheit der Modulkonfiguration ergeben.

In einer weitern Ausführungsform ist die Speichereinheit eine SQL-Datenbank. SQL ist eine Datenbanksprache, die standardisierte Zugriffe auf die Datenhaltung ermöglicht und somit Zugriffe auf die Datenhaltung standardisiert und vereinfacht.

In einer Ausführungsform erstellt die Software zur Laufzeit dynamisch grundlegende Datenzugriffe auf die SQL-Datenbank, die eine Datenerfassung oder Datenverarbeitung benötigt. Die Erstellung (Konfiguration) des Software-Moduls unterteilt sich dabei in Datenzugriffe / SQL-Statements (Erstellung spezieller SQL-Statements, die bei der Modulkonfiguration zusätzlich zu den automatisch erstellten Datenverarbeitungszugriffen der erfindungsgemäßen Software benötigt werden), die Moduldefinition (Definition von Erfassungsmasken beziehungsweise Seiten inklusive benötigter Eigenschaften und Funktionen), die Moduleventverknüpfung (Verknüpfung zuvor definierter Steuerelemente mit Ereignisfunktion, die von der erfindungsgemäßen Software zur Erstellung der Software-Moduls zur Verfügung gestellt werden, gegebenenfalls der Feinjustierung der Ereignisfunktion) und der Menüdefinition (hier werden die bereits konfigurierten Software-Module anhand der entsprechenden Konfigurationsdaten in den Konfigurationstabellen zu einem Menübaum in einem Startmodul angeboten), um einem Aufruf des gewünschten Software-Moduls aus der Software-Laufzeitumgebung zu ermöglichen.

In einer weiteren Ausführungsform sind Informationen zur Datenstruktur für die Daten in der SQL-Datenbank in den Konfigurationsdaten definiert. Damit benötigt die SQL-Datenbank keine fest vorgegebene in der Datenbank hinterlegte Datenstruktur. Vielmehr werden Schlüsselangaben zu den einzelnen benötigten physikalischen Tabellen innerhalb der jeweiligen Modul-Konfiguration gespeichert. Lediglich die Konfigurations- sowie die Logtabellenstrukturen sind fix definiert. Logtabellen sind Tabellen, die Protokolldaten enthalten (beispielsweise welcher User hat sich wann angemeldet, welches Modul aufgerufen und Fortschreibung eventuell aufgetretener Fehler).

In einer Ausführungsform ist die Software innerhalb einer MS.Net Entwicklungsumgebung programmiert. Damit können die Vorteile der durch Microsoft zur Verfügung gestellten Plattform genutzt werden.

In einer Ausführungsform ist die Untermenge eine echte Teilmenge der Vielzahl an Funktionsbausteinen. Dadurch können Software-Module erzeugt werden, die nur den wirklich notwendigen Umfang haben und nicht benötigte Funktionen auch nicht unnötig durch zusätzlich Funktionsbausteine bereitgestellt werden. Damit wird das ausgeführte Software-Modul von Umfang her schlank und damit ressourcenschonend ausgeführt.

In einer weiteren Ausführungsform umfassen die Konfigurationsdaten ein oder mehrere Elemente der Gruppe einer Zuteilung von Datenfeldern, einer Definition von Erfassungsmasken und benötigter Datenfelder, einer Definition von Datenzugriffen und einer Verknüpfung zuvor definierter Steuerelemente mit Ereignisfunktion umfassen. Skriptprogrammiersprachen kommen bei der Konfiguration nicht zum Einsatz, womit keine besonderen Programmierkenntnisse zur Konfiguration vorausgesetzt werden. Die Vorteile für Kunden liegen somit auf der Hand. Ihre Prozesse werden innerhalb der erfindungsgemäßen Software individueller konfiguriert, können dem Wachstum oder ggf. auftretenden Prozessänderungen stets angepasst werden, ohne sich der Gefahr auszusetzen, dass man sich Jahre später außerhalb der Hauptzielgruppe befindet.

In einer Ausführungsform wird als Feinjustierung der Ereignisfunktion innerhalb der zur Verfügung stehenden Funktionen weitere Unterfunktionen definiert. Damit kann auf die Besonderheiten jedes einzelnen erstellten Software-Moduls genauer eingegangen werden.

Die Erfindung betrifft des Weiteren ein Verfahren zur Erzeugung und Ausführung eines Software-Moduls auf einem erfindungsgemäßen Computersystem mit mehreren miteinander zum Datenaustausch verbundenen Komponenten umfassend mindestens eine Recheneinheit, mindestens eine Speichereinheit und mindestens eine Ein- und Ausgabeeinheit und eine zumindest auf einer der Komponenten installierten Software mit einer geeigneten Laufzeitumgebung, umfassend die Schritte:
- Aufruf der Software in der Laufzeitumgebung, wobei die Software eine Vielzahl an unterschiedlichen Funktionsbausteinen umfasst;
- Bereitstellen von abgespeicherten Konfigurationsdaten zur Herstellung einer Lauffähigkeit der Software und des Software-Moduls auf Basis der abgespeicherten Konfigurationsdaten;
- Zugreifen der Software auf die abgespeicherten Konfigurationsdaten und Einlesen der Konfigurationsdaten;
- Erzeugen zumindest eines anwendungsspezifisch konfigurierten Software-Moduls mittels Verknüpfung einer Untermenge der Funktionsbausteine gemäß der entsprechend eingelesenen Konfigurationsdaten; und
- Ausführen des auf Basis der Konfigurationsdaten erzeugten Software-Moduls durch die Software auf dem Computersystem.

Das Aufrufen der Software selbst kann dabei gemäß einer der dem Fachmann bekannten Art und Weise erfolgen, beispielsweise durch Doppelklick auf ein entsprechendes Symbol verknüpft mit der ausführbaren Software. In einer Ausführungsform das Software-Modul zunächst als System-Modul erzeugt werden.

Eine Ausführungsform des Verfahrens umfasst die weiteren Schritte:
- Erfassen der Konfigurationsdaten mittels eines auf dem Computersystem selbständig ausführbaren Konfigurationsmoduls; und
- Abspeichern der erfassten Konfigurationsdaten in der Speichereinheit.

In einer weiteren Ausführungsform des Verfahrens werden beim Schritt des Abspeicherns die erfassten Konfigurationsdaten in mindestens einer Konfigurationstabelle in der Speichereinheit abgespeichert. In einer bevorzugten Ausführungsform können dabei die Konfigurationsdaten gemäß Nutzervorgaben in unterschiedlichen Kombinationen in unterschiedlichen Konfigurationstabellen abgespeichert werden.

In einer weitern Ausführungsform des Verfahrens umfasst dabei der Schritt des Zugreifens und Einlesens zumindest das Einlesen von Systemkonfigurationsdaten aus den Konfigurationsdaten, mit denen im Schritte Erzeugens zumindest ein System-Moduls als das Software-Modul zur späteren Ausführung erstellt wird.

In einer weiteren Ausführungsform des Verfahrens umfasst dabei der Schritt des Erzeugens die weiteren Schritte:
- Anbieten unterschiedlicher Gruppen an Konfigurationsdaten zur Auswahl, vorzugsweise als Menübaum; und
- Erstellen eines Anwender-Moduls als weiteres Software-Modul auf Basis der ausgewählten Konfigurationsdaten.

### Kurze Beschreibung der Abbildungen

Diese und andere Aspekte der Erfindung werden im Detail in den Abbildungen wie folgt gezeigt:
- Fig.1:: eine Ausführungsform des erfindungsgemäßen Computersystems;
- Fig.2:: eine weitere Ausführungsform des erfindungsgemäßen Computersystems;
- Fig.3:: eine Ausführungsform eines durch die Software erstellten Software-Moduls;
- Fig.4:: eine Ausführungsform des erfindungsgemäßen Verfahrens;
- Fig.5: eine Ausführungsform eines Teils des erfindungsgemäßen Verfahrens umfassend das Erfassen und Abspeichern von Konfigurationsdaten;
- Fig.6:: eine Ausführungsform eines weiteren Teils des erfindungsgemäßen Verfahrens umfassend das Anbieten unterschiedlicher Gruppen an Konfigurationsdaten zur Auswahl.

### Detaillierte Beschreibung der Ausführungsbeispiele

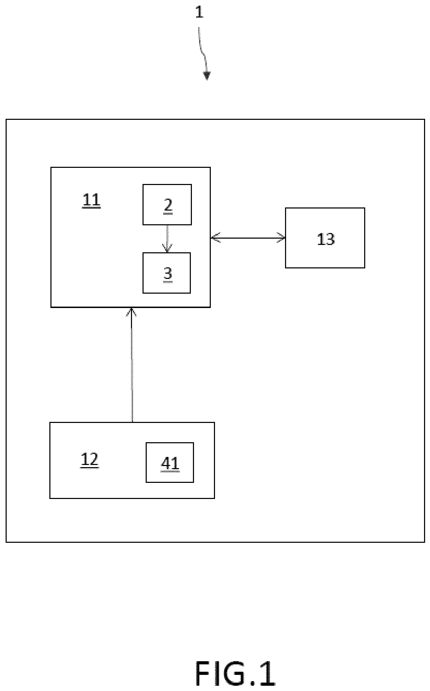

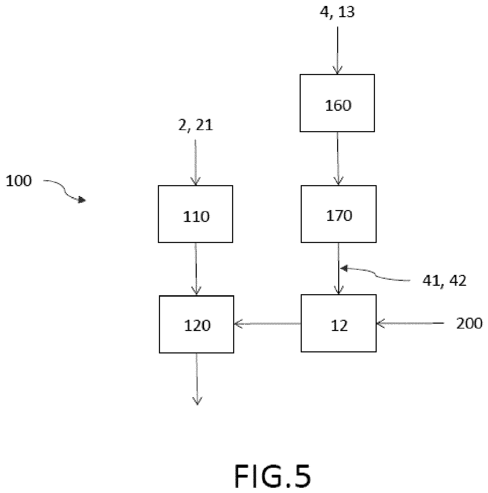

Fig.1 zeigt eine Ausführungsform des erfindungsgemäßen Computersystems 1 mit mehreren miteinander zum Datenaustausch verbundenen Komponenten umfassend mindestens eine Recheneinheit 11, mindestens eine Speichereinheit 12 und mindestens eine Ein- und Ausgabeeinheit 13 und eine zumindest auf einer der Komponenten installierten Software 2 mit einer geeigneten Laufzeitumgebung, die eine Vielzahl an unterschiedlichen Funktionsbausteinen 21 zur Erzeugung mindestens eines anwendungsspezifisch konfigurierten Software-Moduls 3 umfasst. Hierbei umfasst das durch die Software 2 ausgeführte Software-Modul 3 eine Untermenge 21 U der verfügbaren Funktionsbausteine 21, wobei eine Lauffähigkeit der Software 2 und des mindestens einen Software-Moduls 3 auf Basis von abgespeicherten Konfigurationsdaten 41 hergestellt wird, die durch die Speichereinheit 12 bereitgestellt werden, und auf die die Software 2 nach deren Aufruf in der Laufzeitumgebung zugreift, zumindest einen Teil der Konfigurationsdaten 41 einliest und eine Verknüpfung der Funktionsbausteine 21 gemäß der eingelesenen Konfigurationsdaten 41 zu Ausführung des so erzeugten Software-Moduls 3 durchführt. In dieser Ausführungsform ist die Speichereinheit 12 eine SQL-Datenbank, wobei die Software 2 zur Laufzeit dynamisch grundlegende Datenzugriffe auf die SQL-Datenbank 12, die eine Datenerfassung oder Datenverarbeitung benötigt, erstellt. Hierbei ist eine Datenstruktur für die Daten in der SQL-Datenbank 12 in den Konfigurationsdaten 41 definiert. Die Konfigurationsdaten 41 selbst können dabei ein oder mehrere Elemente der Gruppe einer Zuteilung von Datenfeldern, einer Definition von Erfassungsmasken und benötigter Datenfelder, einer Definition von Datenzugriffen und einer Verknüpfung zuvor definierter Steuerelemente mit Ereignisfunktion umfassen. Hierbei werden beispielsweise als Feinjustierung 200 der Ereignisfunktion innerhalb der zur Verfügung stehenden Funktionen weitere Unterfunktionen definiert werden (siehe auch Fig.5).

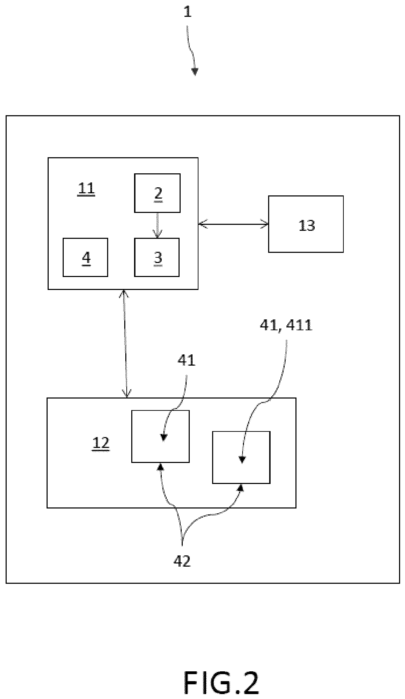

Fig.2 zeigt eine weitere Ausführungsform des erfindungsgemäßen Computersystems 1 gemäß Fig.1, das hier des Weiteren zumindest ein selbständig ausführbares Konfigurationsmodul 4 umfasst, mit dem die Konfigurationsdaten 41 erfasst und in der Speichereinheit 12 abgespeichert werden können. Dieses Konfigurationsmodul kann beispielsweise lauffertig auf der Recheneinheit 11 installiert sein. Das Konfigurationsmodul 4 ist dabei dazu ausgestaltet, die erfassten Konfigurationsdaten 41 in mindestens einer Konfigurationstabelle 42 in der Speichereinheit 12 zu deren Einlesung abzuspeichern. Hierbei können die Konfigurationsdaten 41 durch das Konfigurationsmodul 4 gemäß Nutzervorgaben in unterschiedlichen Kombinationen in unterschiedlichen Konfigurationstabellen 42 zur Einlesung der Konfigurationsdaten 41 zumindest einer der Konfigurationstabellen 42 abgespeichert werden. Hierbei sind alle benötigten Datenzugriffe und Schlüsselangaben der Datenhaltung zur Ausführung eines der gemäß der jeweiligen Konfigurationsdaten 41 zu erstellenden und auszuführenden Software-Module 3 abgespeichert. Hierzu kann die Software 2 neben physikalischen Datentabellen zusätzlich auch logische oder virtuelle Tabellen zur Abspeicherung der Kundendaten erzeugen, um eine Standardisierung der benötigten Datenzugriffe zu ermöglichen. Hierbei liest die Software 2 nach Aufruf aus den Konfigurationsdaten 41 zumindest Systemkonfigurationsdaten 411 zur Erstellung und Ausführung eines System-Moduls 31 als das Start-Software-Modul 3 ein. Durch ein solches Start-System-Modul 31 können beispielsweise unterschiedliche Gruppen an Konfigurationsdaten 41 zur Auswahl des von der Software 2 zur nachfolgenden Erstellung eines ausgewählten Anwender-Moduls 32 als weiteres Software-Modul 3 angeboten werden. Hierzu können die auszuwählenden Gruppe an Konfigurationsdaten 41 als Menübaum 311 angeboten, beispielsweise in der Form eines Menübaums aus Konfigurationstabellen oder auszuwählenden Icons.

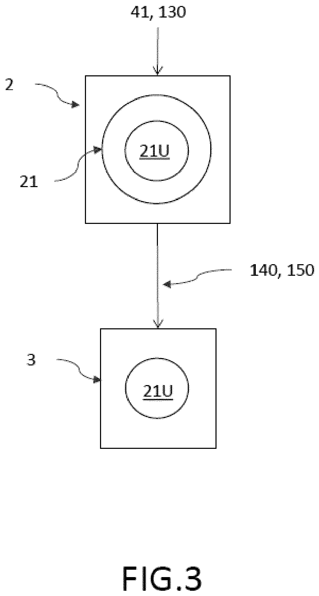

Fig.3 zeigt eine Ausführungsform eines durch die Software 2 erstellten Software-Moduls 3. Die gemäß der eingelesenen Konfigurationsdaten 41 verknüpften Funktionsbausteine 21 stellen hier als Untermenge 21 U eine echte Teilmenge der Vielzahl an in der Software 2 als Quellcodebestandteile der Software 2 grundsätzlich verfügbaren Funktionsbausteine 21 dar. Hierbei stellt die Software 2 außerdem Funktionen zur Gewährleistung der konkreten Verbindungsmöglichkeiten der Funktionsbausteine 21 untereinander bereit, deren konkrete Verknüpfung erst durch die eingelesenen Konfigurationsdaten 41 festgelegt ist. Die Software 2 stellt hierbei die einzelnen benötigten Funktionsbausteine 21 als Klassen zur Verfügung und gewährleistet die korrekten Verbindungsmöglichkeiten zwischen diesen. Skriptprogrammiersprachen kommen bei der Konfiguration nicht zum Einsatz, womit auch keine besonderen Programmierkenntnisse zur Konfiguration vorausgesetzt werden. Die Funktionsbausteine 21 lassen sich mit Funktionen und Parametern innerhalb der Konfiguration in ihrem Verhalten beeinflussen bzw. abändern. Die Funktionsbausteine 21 erfüllen aber erst durch eine Aktivierung einer speziellen Moduleventverknüpfung oder einer integrierten Funktion eine ihm zugeteilte fest definierte Aufgabe auf einer kontextunabhängigen Weise. Dazu ist die Software 2 innerhalb einer MS.Net Entwicklungsumgebung programmiert. Beispielsweise bietet der Funktionsbaustein *'@DefVal'* die Funktionalität einen bestimmten Standardwert auf ein Steuerelement einer Maske/Seite zu setzen, sofern es diesem Steuerelement als Funktionsbaustein 21 innerhalb der Konfiguration zugeordnet wurde. Als Parameter erhält dieser Funktionsbaustein 21 die Herkunft "Address.SalesRep" sowie die Bedingung "B_ID=H_Lng1" zur eindeutigen Ermittlung des Wertes aus der angegebenen Datenherkunft. In diesem Fall wird der 'Verkäufer' der ausgewählten Adresse im Software-Modul 3 der Auftragskopfdaten als Standardwert gefordert, siehe:
@DefVal(Address.SalesRep;B_ID=H_Lng1)

Erst durch die Aktivierung einer speziellen Ereignisfunktion (Moduleventverknüpfung) erfüllt dieser Baustein seine limitierte fest definierte Aufgabe. Dieser Funktionsbaustein erledigt diese spezielle Aufgabe stets nur kontextunabhängig. Eine Prüfung auf ablaufabhängige Plausibilität zu anderen vorhandenen Daten kann dieser Funktionsbaustein nicht durchführen. Dies muss sich stattdessen aus der Gesamtheit der Modulkonfiguration ergeben.

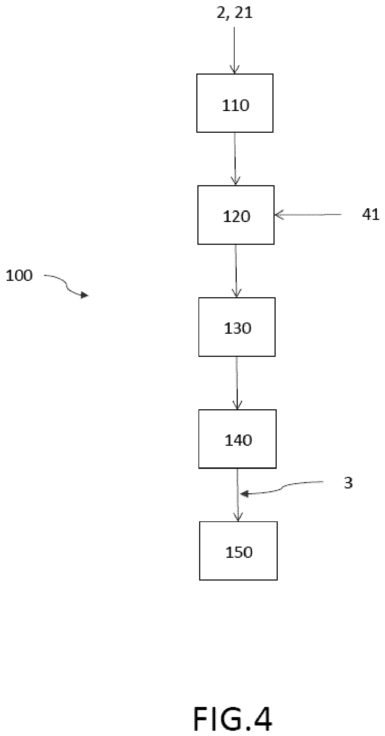

Fig.4 zeigt eine Ausführungsform des erfindungsgemäßen Verfahrens 100 zur Erzeugung und Ausführung eines Software-Moduls 3 auf einem Computersystem 1 gemäß Fig.1 oder 2 mit mehreren miteinander zum Datenaustausch verbundenen Komponenten umfassend mindestens eine Recheneinheit 11, mindestens eine Speichereinheit 12 und mindestens eine Ein- und Ausgabeeinheit 13 und eine zumindest auf einer der Komponenten installierten Software 2 mit einer geeigneten Laufzeitumgebung, umfassend die Schritte des Aufrufens 110 der Software 2 in der Laufzeitumgebung, wobei die Software 2 eine Vielzahl an unterschiedlichen Funktionsbausteinen 21 umfasst; des Bereitstellens 120 von abgespeicherten Konfigurationsdaten 41 zur Herstellung einer Lauffähigkeit der Software 2 und des Software-Moduls 3 auf Basis der abgespeicherten Konfigurationsdaten 41; des Zugreifens 130 der Software auf die abgespeicherten Konfigurationsdaten 41 und Einlesen der Konfigurationsdaten 41; des Erzeugens 140 zumindest eines anwendungsspezifisch konfigurierten Software-Moduls 3 mittels Verknüpfung einer Untermenge 21 U der Funktionsbausteine 21 gemäß der entsprechend eingelesenen Konfigurationsdaten 41; und des Ausführens 150 des auf Basis der Konfigurationsdaten 41 erzeugten Software-Moduls 3 durch die Software 2 auf dem Computersystem 1.

Fig.5 zeigt eine Ausführungsform eines Teils des erfindungsgemäßen Verfahrens 100 umfassend das Erfassen 160 der Konfigurationsdaten 41 mittels eines auf dem Computersystem 1 selbständig ausführbaren Konfigurationsmoduls 4 und das nachfolgende Abspeichern 170 der im vorangegangenen Schritt 160 erfassten Konfigurationsdaten 41 in der Speichereinheit 12. Die Konfigurationsdaten 41 selbst können dabei ein oder mehrere Elemente der Gruppe einer Zuteilung von Datenfeldern, einer Definition von Erfassungsmasken und benötigter Datenfelder, einer Definition von Datenzugriffen und einer Verknüpfung zuvor definierter Steuerelemente mit Ereignisfunktion umfassen. Hierbei kann beispielsweise als Feinjustierung 200 der Ereignisfunktion innerhalb der zur Verfügung stehenden Funktionen weitere Unterfunktionen definiert werden. Das Konfigurationsmodul 4 kann dabei die erfassten Konfigurationsdaten 41 in einer oder mehreren Konfigurationstabellen 42 in der Speichereinheit 12 zu deren Einlesung durch die Software 2 abspeichern. Hierbei können die Konfigurationsdaten 41 gemäß Nutzervorgaben in unterschiedlichen Kombinationen in unterschiedlichen Konfigurationstabellen 42 zur Einlesung der Konfigurationsdaten 41 zumindest einer der Konfigurationstabellen 42 abgespeichert werden.

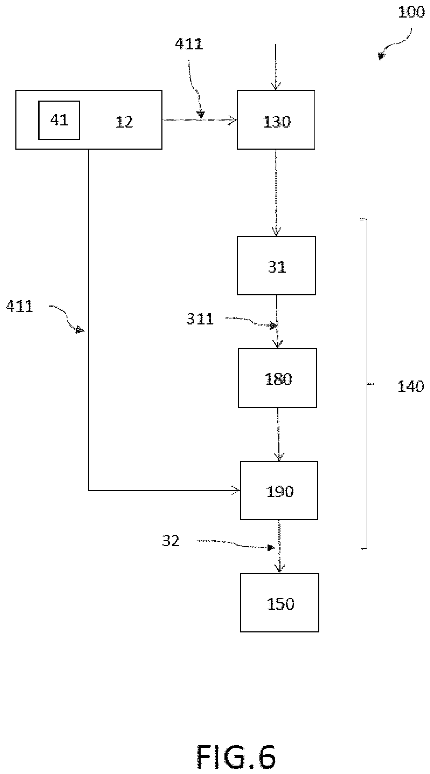

Fig.6 zeigt eine Ausführungsform eines weiteren Teils des erfindungsgemäßen Verfahrens 100 umfassend das Anbieten unterschiedlicher Gruppen an Konfigurationsdaten 41 zur Auswahl. Hierbei umfasst der Schritt des Zugreifens und Einlesens 130 zumindest das Einlesen von Systemkonfigurationsdaten 411 aus den Konfigurationsdaten 41, mit denen im Schritt des Erzeugens 140 zumindest zuerst ein System-Moduls 31 als ein Start-Software-Modul 3 zur Vorbereitung der Erstellung und Ausführung des eigentlich gewünschten Anwender-Moduls 3 erstellt und ausgeführt wird. Das so erzeugte und ausgeführte System-Moduls 31 bietet beispielsweise auf einer entsprechenden Maske unterschiedliche Gruppen an Konfigurationsdaten 41 beispielsweise in Form eines Menübaums 311 aus einer Listen an Konfigurationstabellen 42 mit jeweils unterschiedlichen Konfigurationsdaten 41 dem Nutzer zur Auswahl des von ihm gewünschten zu erstellenden Software-Moduls an 180. Nach Auswahl durch den Nutzer folgt das Erstellen 190 eines eigentlichen Anwender-Moduls 32 durch die Software 2 als eines vom Nutzer aus einer Vielzahl an möglichen Software-Modulen 3 ausgewählten speziellen Software-Moduls 3 auf Basis der ausgewählten Konfigurationsdaten 41. Dieses spezielle Software-Modul 3 kann dann wie in Fig.4 beschrieben ausgeführt werden.

Die hier gezeigten Ausführungsbeispiele stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung umfasst.

### Liste der Bezugszeichen

- 1: erfindungsgemäßes Computersystem
- 11: Recheneinheit
- 12: Speichereinheit, beispielsweise eine SQL-Datenbank
- 13: Ein- und Ausgabeeinheit
- 2: Software
- 21: Funktionsbausteine
- 21U: Untermenge der Funktionsbausteine
- 3: Software-Modul
- 31: System-Modul
- 311: Menübaum
- 32: Anwendermodul
- 4: Konfigurationsmodul
- 41: Konfigurationsdaten
- 411: Systemkonfigurationsdaten
- 100: erfindungsgemäßes Verfahren zur Erzeugung und Ausführung eines Software-Moduls
- 110: Aufruf der Software in der Laufzeitumgebung
- 120: Bereitstellen der Konfigurationsmodule
- 130: Zugreifen der Software auf die Konfigurationsmodule
- 140: Erzeugungen des Software-Moduls
- 150: Ausführen des erzeugten Software-Moduls
- 160: Erfassen von Konfigurationsdaten mittels eines Konfigurationsmoduls
- 170: Abspeichern der erfassten Konfigurationsdaten in der Speichereinheit
- 180: Anbieten unterschiedlicher Gruppen an Konfigurationsdaten zur Auswahl
- 190: Erstellen eines Anwender-Moduls als weiteres Software-Modul auf Basis der ausgewählten Konfigurationsdaten
- 200: Feinjustierung der Ereignisfunktion in den Konfigurationsdaten

## Patentansprüche

1. Ein Computersystem (1) mit mehreren miteinander zum Datenaustausch verbundenen Komponenten umfassend mindestens eine Recheneinheit (11), mindestens eine Speichereinheit (12) und mindestens eine Ein- und Ausgabeeinheit (13) und eine zumindest auf einer der Komponenten installierten Software (2) mit einer geeigneten Laufzeitumgebung, die eine Vielzahl an unterschiedlichen Funktionsbausteinen (21) zur Erzeugung mindestens eines anwendungsspezifisch konfigurierten Software-Moduls (3) umfasst, wobei das durch die Software (2) ausgeführte Software-Modul (3) eine Untermenge (21 U) der verfügbaren Funktionsbausteine (21) umfasst, wobei eine Lauffähigkeit der Software (2) und des mindestens einen Software-Moduls (3) auf Basis von abgespeicherten Konfigurationsdaten (41) hergestellt wird, die durch die Speichereinheit (12) bereitgestellt werden, und auf die die Software (2) nach deren Aufruf in der Laufzeitumgebung zugreift, zumindest einen Teil der Konfigurationsdaten (41) einliest und eine Verknüpfung der Funktionsbausteine (21) gemäß der eingelesenen Konfigurationsdaten (41) zu Ausführung des so erzeugten Software-Moduls (3) durchführt.

2. Das Computersystem (1) nach Anspruch 1,
**dadurch gekennzeichnet,**
**dass** das Computersystem (1) des Weiteren zumindest ein selbständig ausführbares Konfigurationsmodul (4) umfasst, mit dem die Konfigurationsdaten (41) erfasst und in der Speichereinheit (12) abgespeichert werden können.

3. Das Computersystem (1) nach Anspruch 2,
**dadurch gekennzeichnet,**
**dass** das Konfigurationsmodul (4) dazu ausgestaltet ist, die erfassten Konfigurationsdaten (41) in mindestens einer Konfigurationstabelle (42) in der Speichereinheit (12) zu deren Einlesung abzuspeichern.

4. Das Computersystem (1) nach Anspruch 3,
**dadurch gekennzeichnet,**
**dass** das Konfigurationsmodul (4) dazu ausgestaltet ist, die Konfigurationsdaten (41) gemäß Nutzervorgaben in unterschiedlichen Kombinationen in unterschiedlichen Konfigurationstabellen (42) zur Einlesung der Konfigurationsdaten (41) zumindest einer der Konfigurationstabellen (42) abzuspeichern,
wobei vorzugsweise alle benötigten Datenzugriffe, die nicht durch die Software zur Laufzeit automatisch erstellt werden, sowie Schlüsselangaben der Datenhaltung zur Ausführung eines der gemäß der jeweiligen Konfigurationsdaten (41) zu erstellenden und auszuführenden Software-Module (3) abgespeichert sind, und/oder
die Software (2) neben physikalischen Datentabellen zusätzlich auch logische oder virtuelle Tabellen zur Abspeicherung der Kundendaten erzeugt, um eine Standardisierung der benötigten Datenzugriffe zu ermöglichen.

5. Das Computersystem (1) nach einem der voranstehenden Ansprüche,
**dadurch gekennzeichnet,**
**dass** die Software (2) nach Aufruf aus den Konfigurationsdaten (41) zumindest Systemkonfigurationsdaten (411) zur Erstellung und Ausführung eines System-Moduls (31) als das Software-Modul (3) einliest, vorzugsweise werden durch das System-Modul (31) unterschiedliche Gruppen an Konfigurationsdaten (41) zur Auswahl des von der Software (2) nachfolgend zu erstellenden Anwender-Moduls (32) als weiteres Software-Modul (3) angeboten, besonders bevorzugt wird die auszuwählende Gruppe an Konfigurationsdaten (41) als Menübaum (311) angeboten.

6. Das Computersystem (1) nach einem der voranstehenden Ansprüche,
**dadurch gekennzeichnet,**
**dass** die Funktionsbausteine (21) Quellcodebestandteile der Software (2) sind, vorzugsweise stellt die Software (2) Funktionen zur Gewährleistung der konkreten Verbindungsmöglichkeiten der Funktionsbausteine (21) untereinander bereit.

7. Das Computersystem (1) nach einem der voranstehenden Ansprüche,
**dadurch gekennzeichnet,**
**dass** der Funktionsbaustein (21) erst durch eine Aktivierung einer speziellen Moduleventverknüpfung oder einer integrierten Funktion eine ihm zugeteilte fest definierte Aufgabe auf eine kontextunabhängige Weise erfüllt.

8. Das Computersystem (1) nach einem der voranstehenden Ansprüchen,
**dadurch gekennzeichnet,**
**dass** die Speichereinheit (12) eine SQL-Datenbank ist, wobei die Software (2) zur Laufzeit dynamisch grundlegende Datenzugriffe auf die SQL-Datenbank (12), die eine Datenerfassung oder Datenverarbeitung benötigen, erstellt, vorzugsweise sind Informationen zur Datenstruktur für die Daten in der SQL-Datenbank (12) in den Konfigurationsdaten (41) definiert.

9. Das Computersystem (1) nach einem der voranstehenden Ansprüche, **gekennzeichnet dadurch,**
**dass** die Software (2) innerhalb einer MS.Net Entwicklungsumgebung programmiert ist.

10. Das Computersystem (1) nach einem der voranstehenden Ansprüchen,
**dadurch gekennzeichnet,**
**dass** die Untermenge (21 U) eine echte Teilmenge der Vielzahl an Funktionsbausteinen (21) ist.

11. Das Computersystem (1) nach einem der voranstehenden Ansprüche,
**dadurch gekennzeichnet,**
**dass** die Konfigurationsdaten (41) ein oder mehrere Elemente der Gruppe einer Zuteilung von Datenfeldern, einer Definition von Erfassungsmasken und benötigter Datenfelder, einer Definition von Datenzugriffen und einer Verknüpfung zuvor definierter Steuerelemente mit Ereignisfunktion umfassen, vorzugsweise werden als Feinjustierung (200) der Ereignisfunktion innerhalb der zur Verfügung stehenden Funktionen weitere Unterfunktionen definiert.

12. Ein Verfahren (100) zur Erzeugung und Ausführung eines Software-Moduls (3) auf einem Computersystem (1) nach Anspruch 1 mit mehreren miteinander zum Datenaustausch verbundenen Komponenten umfassend mindestens eine Recheneinheit (11), mindestens eine Speichereinheit (12) und mindestens eine Ein- und Ausgabeeinheit (13) und eine zumindest auf einer der Komponenten installierten Software (2) mit einer geeigneten Laufzeitumgebung, umfassend die Schritte:
- Aufruf (110) der Software (2) in der Laufzeitumgebung, wobei die Software (2) eine Vielzahl an unterschiedlichen Funktionsbausteinen (21) umfasst;
- Bereitstellen (120) von abgespeicherten Konfigurationsdaten (41) zur Herstellung einer Lauffähigkeit der Software (2) und des Software-Moduls (3) auf Basis der abgespeicherten Konfigurationsdaten (41);
- Zugreifen (130) der Software auf die abgespeicherten Konfigurationsdaten (41) und Einlesen der Konfigurationsdaten (41);
- Erzeugen (140) zumindest eines anwendungsspezifisch konfigurierten Software-Moduls (3) mittels Verknüpfung einer Untermenge (21 U) der Funktionsbausteine (21) gemäß der entsprechend eingelesenen Konfigurationsdaten (41); und
- Ausführen (150) des auf Basis der Konfigurationsdaten (41) erzeugten Software-Moduls (3) durch die Software (2) auf dem Computersystem (1).

13. Das Verfahren (100) nach Anspruch 12, umfassend die weiteren Schritte:
- Erfassen (160) der Konfigurationsdaten (41) mittels eines auf dem Computersystem (1) selbständig ausführbaren Konfigurationsmoduls (4); und
- Abspeichern (170) der erfassten Konfigurationsdaten (41) in der Speichereinheit (12).

14. Das Verfahren (100) nach Anspruch 13, wobei beim Schritt des Abspeicherns (170) die erfassten Konfigurationsdaten (41) in mindestens einer Konfigurationstabelle (42) in der Speichereinheit (12) abgespeichert werden, vorzugsweise können die Konfigurationsdaten (41) gemäß Nutzervorgaben in unterschiedlichen Kombinationen in unterschiedlichen Konfigurationstabellen (42) abgespeichert werden.

15. Das Verfahren (100) nach einem der Ansprüche 14, wobei der Schritt des Zugreifens und Einlesens (130) zumindest das Einlesen von Systemkonfigurationsdaten (411) aus den Konfigurationsdaten (41) umfasst, mit denen im Schritt des Erzeugens (140) zumindest ein System-Moduls (31) als das Software-Modul (3) zur späteren Ausführung erstellt wird, vorzugsweise umfasst dabei der Schritt des Erzeugens (140) die weiteren Schritte:
- Anbieten (180) unterschiedlicher Gruppen an Konfigurationsdaten (41) zur Auswahl, vorzugsweise als Menübaum (311); und
- Erstellen (190) eines Anwender-Moduls (32) als weiteres Software-Modul (3) auf Basis der ausgewählten Konfigurationsdaten (41).
